# DEMANDE DE BREVET EUROPEEN

(11) **EP 0 977 400 A1**
(43) Date de publication de la demande: **02.02.2000**
(21) Numéro de dépôt: 99401942.0
(22) Date de dépôt: 29.07.1999
(51) Int. Cl.: H04L 12/24, G06F 17/30

(54) **Procédé de référencement dans une base d'information d'administration d'un ensemble d'instances d'objet**

(30) Priorité: 31.07.1998 FR 9809825
(71) Demandeur: BULL S.A., 78434 Louveciennes Cedex (FR)
(72) Inventeur: Richard, Jean-Luc, 75017 Paris (FR)
(74) Mandataire: Denis, Hervé

(57) **Abrégé**

La présente invention concerne un procédé de référencement dans une MIB d'une collection d'instances d'objet à partir d'une autre instance d'objet n'appartenant pas au même sous-arbre.

Ce procédé permet d'appliquer une sélection par les arguments portée/filtre (scope/filter) des opérations standard CMIS sur les n instances déclarées dans la collection, pour optimiser le parcours des relations transversales dans l'arbre de contenance entre des instances d'objets managés (MOI), et comporte l'étape suivante :
- une première étape de création d'une instance d'objet de type collection, de classe spécifique moiCollection, ou de classe spécifique moiCollectionBack prédéfinies par le gestionnaire d'objet local CMIS-DB de l'administrateur ISM pour représenter ces relations transversales et qui permet de maintenir automatiquement une copie virtuelle des objets référencés, copies virtuelles qui seront subordonnées dans l'arbre de contenance à l'objet de type collection.

## Description

La présente invention concerne un procédé de référencement dans une base d'information d'administration (MIB) d'un ensemble d'instances d'objet à partir d'une autre instance d'objet n'appartenant pas à un même sous-arbre.

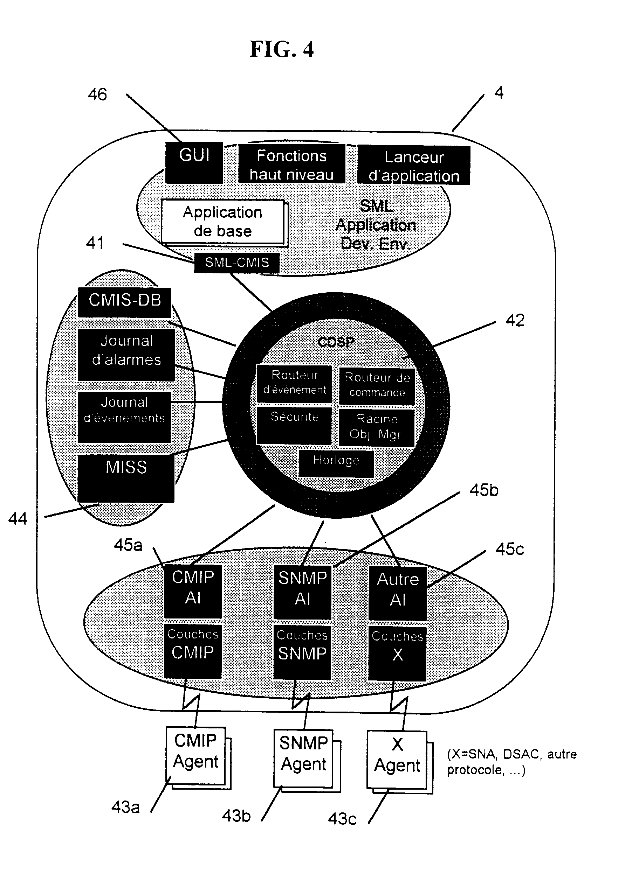

Les services d'accès aux informations d'une MIB peuvent reposer sur le standard CMIS (Common Management Information Service, recommandation IUT-T X.710) connu, qui décrit les opérations que l'on peut effectuer sur les objets spécifiés suivant le modèle du standard GDMO (Guidelines for the Definition of Managed Objects, c'est-à-dire guide, ou encore directives pour la définition des objets administrés, recommandation ITU-T X.722). La présente invention utilise le service de gestion d'informations du standard CMIS. Les applications d'administration font appel soit à des agents (43a, 43b et 43c), soit à des services locaux de l'entité manager qui permettent de gérer localement une base de gestion d'information d'administration (MIB, Management Information Base) hiérarchisée sous forme d'arbre d'objets, sans accès réseau. Dans ces bases de gestion d'informations d'administration (MIB), toutes les ressources sont représentées sous la forme d'objets dans un arbre d'objets tel que représenté en figure 4.

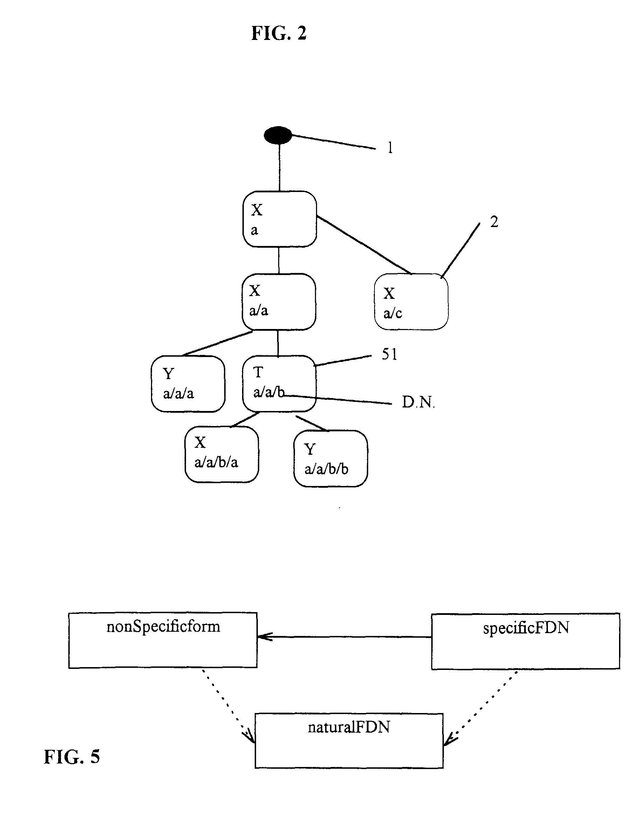

Les objets sont eux-mêmes regroupés en classes. L'objet d'une classe donnée comporte un certain nombre d'attributs et chaque instance d'objet a un nom (N). L'adressage se fait par nom distinctif (Distinguished Name, DN), par exemple, le DN de l'objet (51, figure 2) est "a/b/b".

La figure 4 représente le fonctionnement d'un service de gestion d'informations. Ce service utilise une architecture à deux niveaux. Le premier niveau est constitué d'une entité manager (4) jouant un rôle d'administrateur qui doit visualiser et contrôler des ressources, consulter des caractéristiques, etc., .... . Le second niveau est constitué d'entités agent (43a à 43c) distantes ou locales qui maintiennent les objets sur lesquelles doivent s'appliquer les opérations émises par le niveau administrateur. Le but de l'agent est d'entretenir un modèle de la ressource qu'il gère, modèle consigné et normalisé dans une MIB. Au moins un agent est donc installé sur chaque machine du réseau et peut contrôler un ensemble de ressources locales ou distantes sous la direction d'un ou de plusieurs administrateurs. Un administrateur communique avec chaque agent en utilisant un protocole de gestion standard. Le système d'administration OpenMaster™ commercialisé par la société BULL comprend un ou plusieurs administrateurs ISM-Manager (Integrated System Management) et plusieurs agents (45a à 45c) (ISM/Agent). De plus, d'autres agents commercialisés par d'autre sociétés peuvent être contrôlés par l'administrateur OpenMaster™ via des protocoles standards.

Le mécanisme administrateur-agent est basé sur un modèle d'objet, dans lequel la modélisation d'une ressource constituée, par exemple, d'éléments du système, de logiciels, d'états, d'utilisateurs, etc..., s'appuie sur une approche et une structuration en objets des informations de management. Les équipements "réels" d'un système en réseau (un ordinateur, une imprimante, un circuit, etc.) sont représentés par des objets abstraits organisés dans une base d'information d'administration (MIB, Management Information Base). Les caractéristiques de ces objets (nom d'un ordinateur, caractéristiques des équipements périphériques, les statuts de ces équipements tels qu'une imprimante, etc.) sont appelés les attributs des objets.

Les objets sont divisés en classes d'objets administrés plus souvent appelés MOCs (Managed Object Classes), où chaque MOC représente un type de ressources. Les MOCs définissent les informations que la MIB va contenir pour chaque type de ressources, c'est à dire quels attributs l'objet va avoir. Les MOCs peuvent être interprétées comme une partie du "schéma" de la MIB. Chaque MOC est instanciée en plusieurs instances d'objets administrés (MOls, Managed Object Instances) représentant les occurrences réelles de ce type de ressources.

Prenons l'exemple de trois imprimantes (Imprim1, Imprim2, Imprim3) représentées par trois instances d'objets (P1, P2, P3) dans une base d'information d'administration (MIB), Les attributs de l'objet représentant l'imprimante sont "état de l'imprimante" et "utilisateur". Une classe d'objets MOC "imprimante" (printers) peut donc être définie ayant pour attributs "état de l'imprimante" et "utilisateur actuel". Les instances d'objets (MOIs) de la classe "imprimante" peuvent être les suivantes:

| MOI | MOC | ATTRIBUTS | |
|---|---|---|---|
| (instance) | Classe | état de l'imprimante | utilisateur |
| Imprim 1 | Printer | activée | aucun |
| Imprim 2 | Printer | désactivée | aucun |
| Imprim 3 | Printer | activée | Joe |

L'état (status) de la ressource Imprimante 1 est activée et sans utilisateur actuel dans l'instanciation de l'exemple ci-dessus. Cet exemple comporte encore les instances Imprim 2 et Imprim 3. Une application telle que "ISM-Monitor" fournie par le système d'administration OpenMaster™ (4) permet d'afficher les MOls et leurs états. De même, ISM-Monitor peut afficher sous forme de tableau les attributs de n'importe quelle MOI : par exemple les attributs "état de l'imprimante" et "utilisateur" pour une MOI quelconque de la MOC "Printers".

L'ensemble des objets administrés forme une base d'information d'administration (MIB).

On appelle "MIBlet" un sous arbre directement attaché à la racine de l'arbre distinct d'une base de gestion d'information (MIB). Malgré la division en MIBlets, la base d'information d'administration (MIB) du système d'administration OpenMaster™ est reconnue comme une entité composite unique, avec tous les MIBlets attachés à la même MIB. On appelle "Rootlet" un objet MOI à la racine d'une MIBlet. L'administrateur OpenMaster™ voit le système distribué à travers les objets de la MIB et le contrôle du système se fait par des manipulations des objets de la MIB et de leurs attributs. Les objets sont visibles grâce aux agents ou aux gestionnaire d'objets attachés à l'administrateur OpenMaster™ qui cartographient (mapping) les équipements en MIB sous forme d'arbre d'objets. Un agent peut représenter l'état d'un équipement par la voie d'un objet associé correspondant représenté dans la MIB. Cette cartographie peut associer un objet avec plusieurs équipements "réels", de même qu'un équipement peut être modélisé sous la forme de plusieurs objets. L'administrateur OpenMaster™ envoie des commandes aux agents (43a à 43c) et les agents envoient des réponses à ses commandes et notifient des événements à l'administrateur OpenMaster™ (4) à travers des agents intégrateurs (45) en utilisant un protocole tel que SNMP (Simple Network Management Protocol, 45a), CMIP (Common Management Information Protocol, 45b), ou autres tels que DSAC/AEP (Distributed Systems Administration and Control / Administrative Exchange Protocol, 45c). Chaque protocole d'administration fournit un certain nombre d'opérations simples, par exemple le protocole CMIP fournit toutes les fonctions du standard CMIS à savoir les suivantes:
- l'administrateur (41) peut lire les attributs d'un objet MIB par l'opération M-GET. L'agent (43) répond à une requête M-GET en donnant des informations sur l'équipement.
- l'administrateur (41) peut modifier les attributs d'un objet MIB (l'opération M-SET). L'agent modifie l'équipement "réel" en fonction des nouvelles valeurs d'attributs fournies par l'administrateur;
- l'administrateur (41) peut exécuter une action sur un objet MIB par l'opération M-ACTION. L'agent (43) exécute une action sur l'équipement en fonction de l'action demandée par l'administrateur sur l'objet abstrait;
- l'administrateur (41) peut créer et supprimer des objets de la MIB par les opérations M-CREATE et M-DELETE;
- l'agent (43) peut notifier un événement survenant sur un objet de la MIB à l'administrateur par l'opération M-EVENT. L'agent envoie des informations d'un événement concernant un objet abstrait pour décrire un événement survenu sur un équipement "réel".

Une base d'information d'administration (MIB) a une hiérarchie d'arborescence stricte, c'est à dire que chaque instance d'objet (MOI) a exactement une et une seule MOI supérieure. L'arbre formé par la base d'information d'administration MIB est appelé "arbre de contenance" (containment tree). Les instances d'objets administrés (MOIs) sont nommées par leur position dans l'arbre de contenance de la façon suivante:

Chaque MOI possède un nom distinctif relatif (relative distinguished name, RDN) qui différencie les MOIs ayant un même et unique MOI supérieur (père). Un des attributs de chaque classe d'objets administrés (MOC) est choisi pour spécifier le RDN de l'instance pour un MOI supérieur donné. Cet attribut appelé l'attribut de nommage (naming attribute) est identifié dans les formulaires (templates) GDMO appelés liens de nommage (name binding). Une MOC peut avoir plusieurs liens de nommage supérieurs potentiels, mais chaque MOI utilisera uniquement l'un d'entre eux. Chaque MOI a également un nom distinctif complet (Full Distinguished Name) unique pour la totalité de la MIB. Le nom distinctif global (DN) d'un objet consiste en son nom distinctif relatif (RDN) joint au nom distinctif (DN) de son supérieur c'est-à-dire que le nom distinctif (DN) d'une instance d'objets administrés (MOI) contient son propre nom distinctif relatif (RDN) plus les noms distinctifs relatifs (RDNs) de tous ses supérieurs dans l'arbre de contenance jusqu'à la racine.

La base d'information d'administration (MIB) permet d'établir d'autres relations entre objets que les relations réalisées dans l'arbre de contenance par nom distinctif. Ces relations sont réalisées à l'aide d'attributs de relation (relationship attributes). Ces attributs contiennent le nom distinctif global (DN, Distinguished Name) d'autres objets . Ils sont utilisés comme des références d'un objet à l'autre.

Un des administrateurs d'objet local à l'administrateur ISM-Manager s'appelle CMIS-DB. Il est chargé de stocker une partie de la MIB locale. La rémanence de ces objets stockés est assurée par des fichiers ISAM (Index Sequential Access Method). Cette technologie (ISAM) qui décrit les structures d'articles (records) est une méthode d'accès aux fichiers structurés sous forme d'articles découpés sur un ou plusieurs index et des informations de donnée.

Lorsque l'application de l'administrateur veut sélectionner un des objets pour poser une opération CMIS comme par exemple un M-GET, il doit spécifier l'instance d'objet de base (BOI, Base Object Instance), la portée (scope) et le "filtre" comme argument de l'opération .

L'instance d'objet de base BOI permet d'identifier un objet dans une base d'information d'administration (MIB) qui est le point de départ d'une évaluation du couple portée-filtre dans l'arbre d'objets. La portée (scope) sélectionne une portion de l'arbre depuis cet objet de base. Par exemple, la portée (scope) "Whole subtree" permet de sélectionner tous les sous arbres d'un objet donné. Parmi tous les objets de la portée (scope), les objets sélectionnés sont ceux pour lesquels l'évaluation du filtre est vrai. L'opération est effectuée sur les objets réellement sélectionnés. L'administrateur envoie un M-GET sur des objets et CMIS-DB lit et retourne à l'application la valeur des attributs des objets sélectionnés.

Pour atteindre une instance d'objets de base (BOI), l'administrateur CMIS-DB doit passer d'objet père en objet fils jusqu'à atteindre le noeud de l'objet de base. Cette opération de navigation peut être longue, si pour passer d'un noeud à l'autre, il faut lire physiquement l'ensemble des fils d'un noeud et parmi ceux la choisir celui qui a le bon RDN, et ainsi de suite. Une fois, que l'ordinateur a atteint l'instance de base objet, il doit lire les attributs des objets de la base qui correspondent à la portée (scope) pour pouvoir évaluer le filtre en mémoire, alors que la lecture des instances se fait sur le disque de la machine.

Un but de la présente invention est de proposer un procédé de référencement dans une base d'information d'administration (MIB) organisée en arbres et sous-arbres, d'un ensemble de n instances d'objet à partir d'une autre instance d'objet X n'appartenant pas au même sous-arbre, le procédé fourni par le processus CMIS-DB de l'entité administrateur ISM permet d'appliquer une sélection par les arguments portée/filtre (scope/filter) des opérations standard du service CMIS pour offrir l'avantage de sélectionner plusieurs objets à travers une seule opération.

Ainsi, le problème résolu par l'invention consiste à savoir comment dans une MIB, représenter et stocker depuis une instance X des références à un ensemble de n autres instances d'objet (relations 1-n), ces n autres objets ne faisant pas partie du sous-arbre de X dans l'arbre de contenance (containment tree), et pouvoir tout de même appliquer à cette relation les arguments portée/filtre des opérations standards CMIS qui offrent l'avantage de sélectionner plusieurs objets via une seule opération. Le problème est que les instances sélectionnées depuis un objet X par une portée/filtre (scope/filter) sont nécessairement pour CMIS des objets appartenant au sous-arbre de X. La solution normale dans une MIB, pour représenter ce type de relations transversales est d'introduire un attribut de relation (relationship attribute) dans l'objet X, obligeant alors l'application qui veut soumettre l'opération à la découper en N+1 opérations (une première pour obtenir le contenu de l'attribut de relation (relationship attribute) et une opération individuelle sur chacun des n objets référencés dans cet attribut.

Ce but est atteint par le fait que le procédé de référencement dans une base d'information d'administration (MIB) organisée par définition en arbres et sous-arbres, d'un ensemble de n instances d'objet à partir d'une autre instance d'objet X n'appartenant pas au même sous-arbre mais permettant d'appliquer une sélection par les arguments portée/filtre (scope/filter) des opérations standard du service CMIS sur les n instances pour optimiser le parcours des relations transversales entre des instances d'objets managés (MOI) par déclarations des instances d'objets managés (MOI) membres de la relation caractérisé en ce qu'il comporte l'étape suivante :
- une première étape de création d'une instance d'objet de classe spécifique ("moiCollection" ou "moiCollectionBack") prédéfinie par le gestionnaire d'objet local CMIS-DB de l'administrateur ISM pour représenter ces relations transversales et qui permet de maintenir automatiquement une copie virtuelle des objets référencés, copies virtuelles qui seront subordonnées dans l'arbre de contenance, à l'objet de type collection ainsi créé.

Selon une autre particularité, cette étape de création s'effectue grâce à la soumission par l'application cliente d'une opération M-CREATE (création d'une instance d'objet de la MIB) d'une instance d'objet collection (c'est à dire de classe spécifique "moiCollection" ou "moiCollectionBack") et permet de déclarer dans l'attribut ensemble d'instances ("setOfMOI") contenant la liste des instances (MOI) d'objet managé de la MIB identifiées par l'application cliente pour être référencées dans cette instance d'objet de type collection (classe "moiCollection" ou "moiCollectionBack") ainsi créé.

Selon une autre particularité, le procédé comporte des éventuelles étapes supplémentaires de mise à jour par une opération M-SET de l'attribut setOfMOI de l'instance d'objets de classe spécifique (appelée "moiCollection" ou "moiCollectionBack") prédéfinie pour modifier la liste des MOls référencées dans la collection.

Selon une autre particularité, le procédé comporte une étape supplémentaire de consultation des objets référencés dans une collection, par une requête M-GET avec les arguments suivants : objet de base représentant la collection recherchée, portée (scope) de premier niveau subordonné, et filtre quelconque.

Selon une autre particularité, le procédé comporte une étape de détermination du type de nommage à utiliser dans les réponses aux consultations par des requêtes portées (scoped) sous cette instance de type collection ("moiCollection" ou "moiCollectionBack") par la mise à jour d'un attribut spécifique ("typeOfReplyNaming").

Selon une autre particularité, le procédé comporte une étape de renvoi des réponses aux requêtes CMIS par CMIS-DB en fonction de l'attribut fixant le type de nommage à utiliser pour identifier les objets référencés par l'instance d'objet de type collection ("moiCollection" ou "moiCollectionBack").

Selon une autre particularité, le paramètre portée (scope), lorsque l'objet de base (baseObject) est de type collection ("moiCollection" ou "moiCollectionBack") est détecté par ledit service de gestion d'objets de la MIB qui évalue cet argument de portée (scope) comme un parcours des objets membres de la relation représentée par l'objet de base (baseObject) de classe prédéfinie ("moiCollection", ou "moiCollectionBack").

Selon une autre particularité, le procédé comporte une étape de vérification de la validité des liens physiques transversaux calculés initialement lors des mises à jour de l'attribut ensemble d'instances ("setOfMOI") est effectué en comparant l'attribut FDN réel de l'instance pointée et le FDN mémorisé dans l'attribut ensemble d'instances ("setOfMOI") de l'instance d'objet de collection de classe moiCollection.

Selon une autre particularité, l'étape de renvoi des réponses transmet le FDN de l'objet réel référencé dans l'argument instance d'objets managés de chaque réponse si le type de nommage choisi est d'un premier type (naturelFDN); ou le FDN de la copie virtuelle si le type de nommage est d'un second type (spécificFDN) ou encore un adressage direct au stockage physique dans le cas où le type de nommage est d'un troisième type (nonSpecificForm).

Selon une autre particularité, le procédé comporte une étape de nettoyage de l'attribut setOfMOI des instances de classe prédéfinie ("moiCollection" ou "moiCollectionBack"), lorsque CMIS-DB détecte que des instances déclarées dans la collection consultée n'existent plus dans la MIB.

Un autre but de l'invention est de proposer un dispositif pour délivrer un service CMIS pour une base d'information d'administration (MIB) sur un serveur mettant en oeuvre le procédé selon l'invention.

Ce but est atteint par le fait que le dispositif comporte une classe d'objet managé de type collection (classe "moiCollection" ou classe "moiCollectionBack") qui optimise le parcours des relations transversales entre des instances d'objets appartenant au même serveur de gestion de MIB CMIS-DB.

Selon une autre particularité, le dispositif comprend des moyens de vérifier que l'instance d'objet managé (MOI) référencée existe réellement dans la base (MIB) de gestion d'informations gérée localement et d'établir des liens internes entre l'instance de type collection (classe "moiCollection" ou "moiCollectionBack"), et le noeud physique qui représente l'instance d'objet managé (MOI).

Selon une autre particularité, lorsque l'objet de base (baseObject) est de classe prédéfinie ("moiCollection ou moiCollectionBack"), le paramètre portée (scope) est détecté par ledit service commun de gestion d'informations (CMIS) qui évalue cet argument de portée (scope) comme un parcours des objets membres de la relation représentée par l'instance d'objet de base (baseObject) de classe prédéfinie ("moiCollection", ou "moiCollectionBack").

D'autres particularités et avantages de la présente invention apparaîtront plus clairement à la lecture de la description ci-après faite en référence aux dessins annexés dans lesquels :
- la figure 1 représente un exemple de base d'information (MIB) dans laquelle une instance de classe "moiCollection" et une autre de classe "moiCollectionBack" ont été introduites,
- la figure 2 représente un arbre d'objets constituant une MIB,
- la figure 3 représente l'architecture du process CMIS-DB,
- la figure 4 représente l'architecture du manager OpenMaster™ dont un des composants est l'administrateur CMIS-DB,
- la figure 5 représente un schéma présentant les différentes fonctions de translation et de comparaison entres différentes alternatives de nommage des objets référencés dans les collections,
- la figure 6 représente une fenêtre d'affichage d'une instance d'objet de classe "moiCollection" générée par une interface graphique utilisateur faisant partie d'lSM-MONITOR et permettant la visualisation et la déclaration dans l'attribut setOfMoi de la liste des instances membres de la relation représentée,
- la figure 7 représente une fenêtre d'affichage d'une instance d'objet de classe "moiCollectionBack" générée par une interface graphique utilisateur faisant partie d'lSM-MONITOR et permettant la visualisation et la déclaration dans l'attribut setOfMoi de la liste des instances membres de la relations représentées.
- la figure 8 représente un exemple de stockage sur disque dur d'une MIB comportant des collections d'objets selon l'invention, avec dans la partie gauche le schéma de principe de stockage de l'arbre de contenance et dans la partie droite le schéma de principe de stockage des attributs des instances d'objets managés.

La présente invention permet à l'utilisateur d'optimiser le parcours des relations transversales entre des instances de d'objet managé (MOI) appartenant à la même instance de serveur de gestion d'objet de la MIB (CMIS-DB). Pour cela, l'administrateur doit créer une instance d'objet (16) de classe particulière appelée "moiCollection" ou "moiCollectionBack".

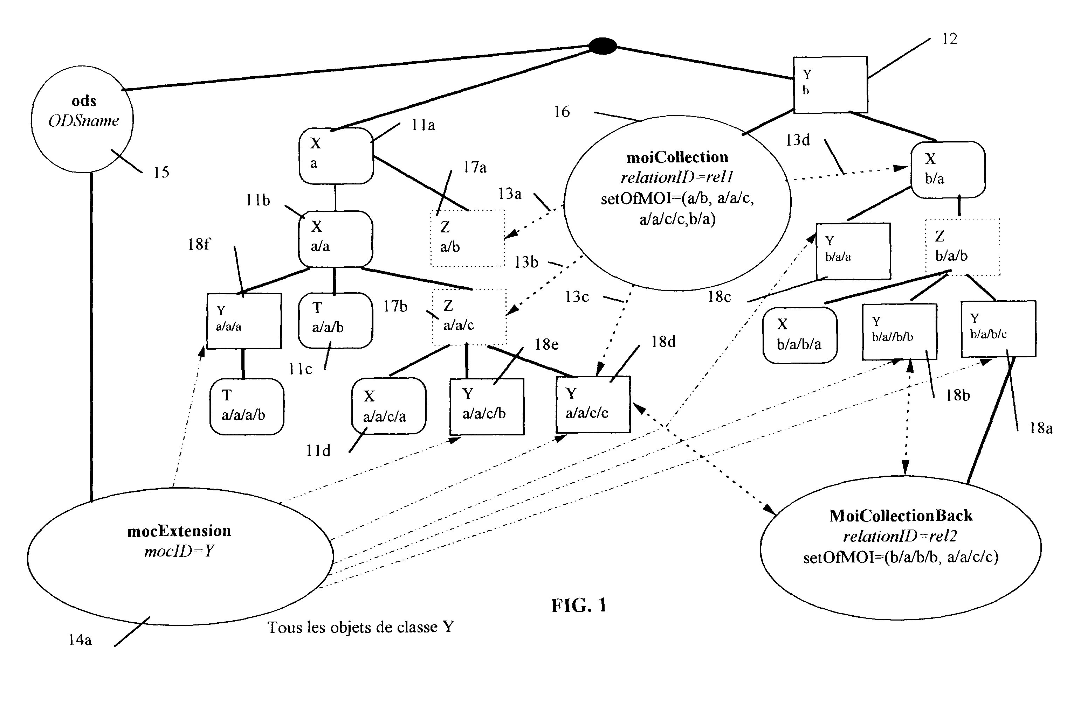

La figure 1 représente un exemple d'une base d'information d'administration (MIB) stockée dans un service commun de gestion d'informations (CMIS-DB).

Dans cette arborescence de la figure 1, les classes représentées par des carrés aux angles arrondis (11a à 11d) et appartenant à un premier arbre (11) sont définies par l'utilisateur et représentées par le noeud générique. Lorsqu'on veut effectuer une recherche sur deux arbres (11, 12) ayant chacun deux racines (110, 120) différentes d'arbres de contenance, l'administrateur CMIS-DB pourra utiliser la classe "moiCollection" (16) qui permet, par l'attribut ensemble d'instances "setOfMOI", d'établir la liste des instances membres de la relation représentée et de créer ainsi des liens internes (13a, 13b, 13c, 13d) entre l'instance de classe "moiCollection" et le noeud physique qui représente l'instance de l'objet déclaré comme membre.

Habituellement dans les bases de gestion d'informations (MIB), une telle relation est représentée par un attribut de relation inclus dans l'objet propriétaire de la relation. Le remplacement de cet attribut de relation par une instance de classe "moiCollection" ou de classe "moiCollectionBack", subordonnée à l'instance d'objet (MOI) propriétaire permet de soumettre la requête désirée sous la forme d'une seule opération CMIS au gestionnaire d'objets CMIS-DB. Cette opération doit comporter en argument objet de base (baseObject) la classe moiCollection ou moiCollectionBack et le nom (Distinguished Name) d'un objet de type collection (par exemple /b/rel1 de la figure 1) et une portée (scope) désignant le premier niveau subordonné; et un filtre quelconque. Ces arguments objet de base (baseObject) et portée (scope) des opérations M-GET et M-SET sont détectées par le gestionnaire de MIB CMIS-DB qui alors n'évalue plus l'argument portée (scope) comme un parcours de l'arbre de contenance des objets (containment tree) mais comme le parcours des objets membres de la relation représentée par l'objet de base (baseObject) de classe prédéfinie "moiCollection" ou de classe "moiCollectionBack".

La classe "moiCollection" dérive de la classe "top" et a cinq attributs supplémentaire (qui existent également dans la classe "moiCollectionBack" décrite plus loin) qui ont les significations suivantes :
a/ un attribut de nommage appelé "relationlD",
b/ un attribut ensemble d'instances appelé "setOfMOI", contenant la liste des instances d'objet managé (MOI) qui sont membres de la relation représentée. Les instances d'objets managés (MOI) membre de la relation sont déclarées lors du M-CREATE de l'instance de classe "moiCollection" et/ou lors de M-SET successifs d'ajout ou de destruction de membre. A chaque ajout d'une instance d'objets (objectInstance) dans l'attribut "setOfMOI " de la classe moiCollection, le gestionnaire de MIB (CMIS-DB) vérifie que l'instance d'objet managé (MOI) référencée existe réellement dans la base d'information d'administration (MIB) gérée localement et établit les liens internes (13a, 13b, 13c, 13d) entre l'instance de classe "moiCollection" et le noeud physique qui représente l'instance de d'objets managés (MOI) membre. De telle sorte que les temps d'accès aux MOls membres d'une relation depuis l'instance d'objet de type collection soient équivalents aux temps d'accès aux MOls directement subordonnées à un noeud dans le containment tree. Une MOI peut rester déclarée dans l'attribut setOfMOI mais ne plus exister réellement dans la base d'information d'administration MIB suite à un M-DELETE. Pour des raisons de performance, CMIS-DB n'essaie pas de modifier automatiquement les objets de classe "moiCollection" pour refléter ces destructions, mais vérifie la validité des liens physiques transversaux calculés lors des mises à jour de l'attribut "setOfMOI" en comparant le FDN réel de l'instance pointée et le FDN (Full Distinguish Name) mémorisé dans le "setOfMOI". L'évaluation de la pseudo portée (pseudo scope) ne retournera que les instances d'objets managés MOIs membres encore existantes dans la base d'information d'administration MIB. Lors de ces détections d'inexistence d'une instance d'objet managé MOI, il y a nettoyage automatique de l'attribut "setOfMOI".
c) Un attribut de mode de retour appelé "returnMode" de type ENUMERATED indiquant comment la valeur de l'attribut setOfMOI est retournée en réponse aux opérations CMIS. Il peut avoir une des trois valeurs suivantes dans l'ordre de la plus à la moins optimum :
   - dontReturnSetOfMoi, pour ne pas retourner dans la valeur de l'attribut setOfMOI, les noms des instances appartenant à la collection,
   - returnSetOfNonSpecific, pour retourner dans la valeur de l'attribut setOfMOI, les noms des instances appartenant à la collection, mais en format nonSpecificForm,
   - returnSetOfFuIIDN qui est la valeur par défaut, pour retourner dans la valeur de l'attribut setOfMOI, les noms des instances appartenant au setOfMOI et ceci en format naturalFDN.
d) un troisième attribut appelé "noDuplicates" de type BOOLEAN indiquant la politique de détection des DN dupliqués. Cette vérification coûteuse doit-elle être effectuée ou non. Valeur dans l'ordre de la plus à la moins optimum :
   - FALSE pas de vérification,
   - TRUE vérification (valeur par défaut).
e) un quatrième attribut spécifique appelé "typeOfReplyNaming" de type ENUMERATED {naturalFDN(O), specificFDN(1), nonspecificForm(2)} indiquant à CMIS-DB quel est le type de nommage à utiliser dans les réponses aux requêtes portées (scopées) sous cette instance de classe moiCollection. La valeur par défaut de cet attribut est configurable par option ou par la variable d'environnement DEFAULT-COL-NAMING de CMIS-DB.

Ainsi, l'utilisateur a la possibilité de choisir le type de nommage utilisé dans les réponses CMIS-DB pour identifier les instances d'objets managés (MOI) qui appartiennent aux collections de classe "moiCollection" ou "moiCollectionBack" en utilisant l'attribut "typeOfReplyNaming".

Le naturalFDN (Full Distinguish Name) correspond au "DistinguishedName" choisi par l'utilisateur pour nommer l'objet référencé dans la collection.

Le specificFDN est le nom distingué (DN, distinguishedName) de la copie virtuelle de l'objet référencé, il est calculé par CMIS-DB, sa valeur est la concaténation du DN de l'objet représentant la collection et d'un RDN fabriquée automatiquement par CMIS-DB pour nommer la copie virtuelle.

Le format nonSpecificForm est un nommage qui contient la référence interne à CMIS-DB du noeud contenant l'instance, c'est un pointeur direct sur la zone de stockage physique sur disque, de l'instance d'objet référencée.

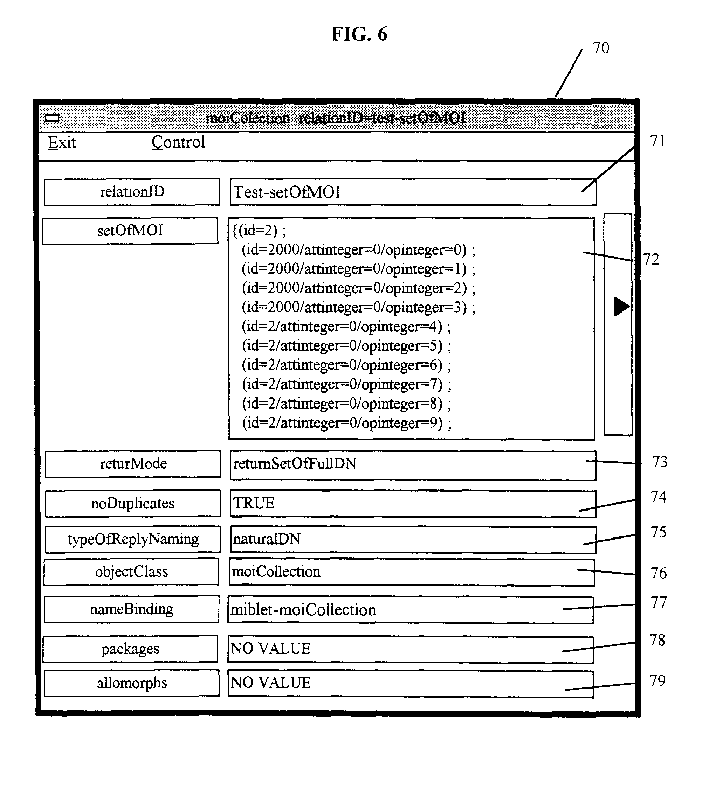

Le gestionnaire de MIB CMIS-DB offre des actions de translation et de comparaison entre certaines de ces différentes alternatives de nommage. Ces fonctions sont accessibles à travers la MIB toolkit SML et à travers des M-ACTION du service de gestion d'informations CMIS. Les translations autorisées sont spécifiées par la figure 5, où les flèches en traits pointillés indiquent que la translation nécessite un accès physique aux objets de stockage et les flèches en trait continu indiquent que la translation est un simple calcul et est donc plus rapide que dans le premier cas. Remarquons que l'accès du naturalFDN au nonSpecificForm est indexé sur le FDN.

Remarquons qu'une instance d'objet collection peut être créée sous n'importe quelle instance d'objets managés (MOI) de la base d'information d'administration (MIB), mais aucune instance d'objets managés (MOI) ne peut être créée explicitement sous un objet de classe "moiCollection".

Description GDMO des objets de type collection :
1) La description en langage GDMO de la classe "moiCollection" est la suivante : 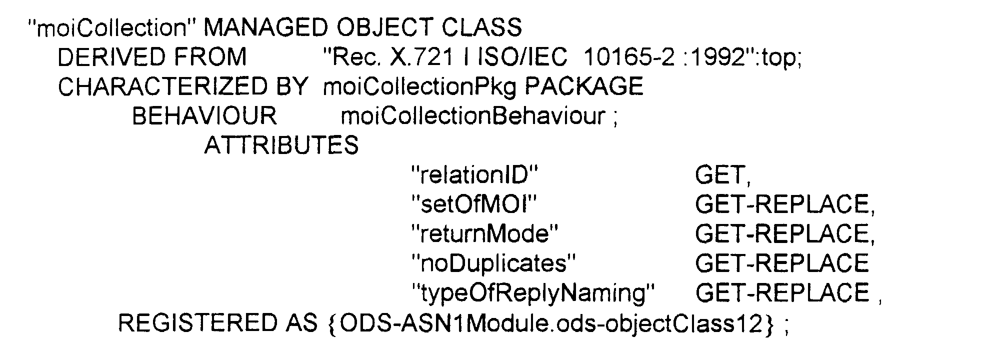
2) La description GDMO de la classe "moiCollectionBack" est la suivante:

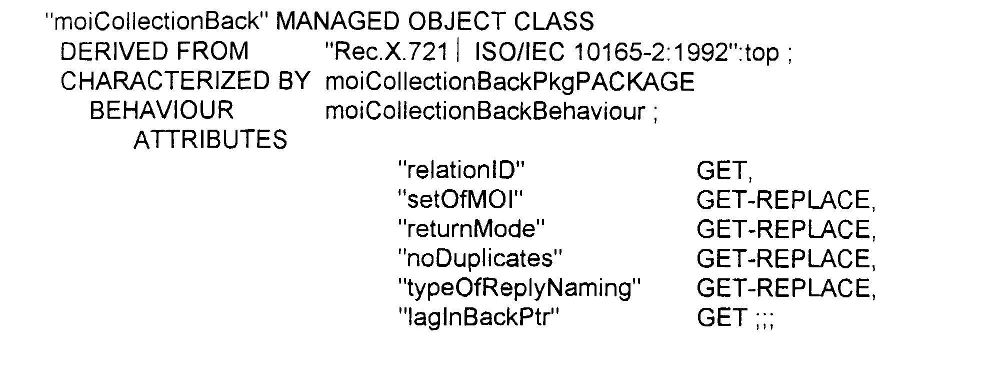

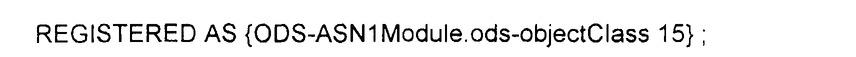

En plus de tous les attributs de la MOC moiCollection, la classe "moiCollectionBack" comporte un attribut supplémentaire de type INTEGER (0..65535) nommé "flaglnBackPtr" dont la valeur sera stockée dans le pointeur arrière positionné dans les MOls appartenant à cette instance de moiCollectionBack. La valeur de cet attribut ne peut être positionnée qu'à la création de l'instance de moiCollectionBack et sa sémantique est laissée à l'entière disposition de l'utilisateur. Elle lui permettra de filtrer les recherches arrières des instances d'objet (MOI) de classe moiCollectionBack qui référençent une MOI donnée.

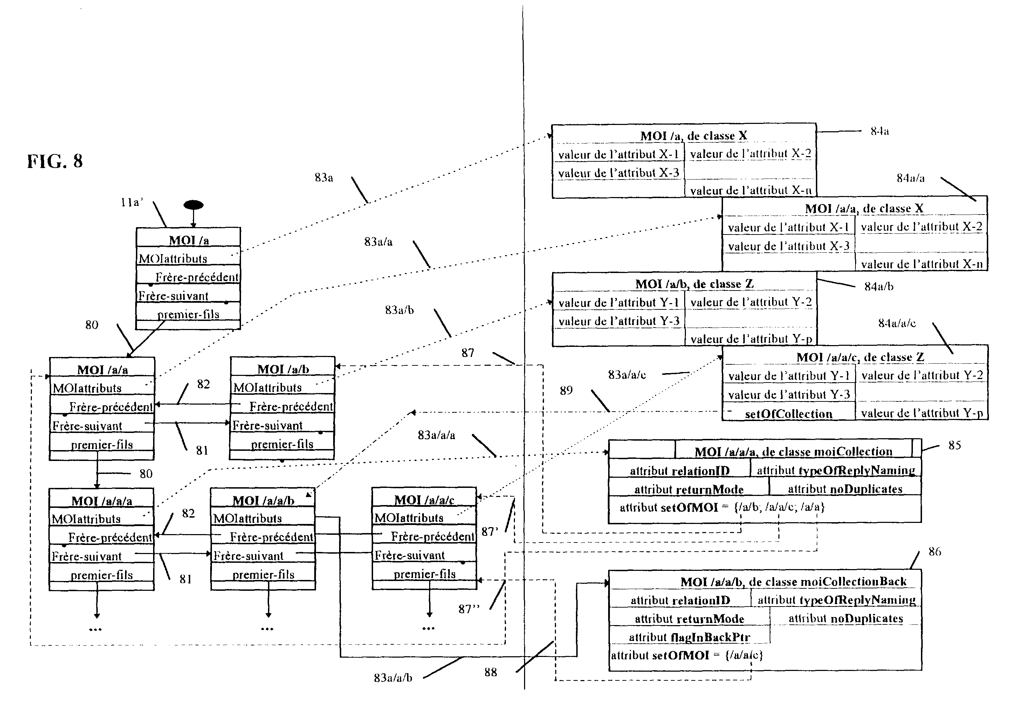

Les enregistrements physiques sur disque d'une instance d'objet de classe "moiCollection" ou de classe "moiCollectionBack" ont la même structure de base que les instances d'objet des autres classes stockées dans la MIB gérée par l'administrateur CMIS-DB. En d'autres termes l'instance fait partie de l'arbre de contenance (containement tree) naturel et, à ce titre, il existe un noeud représentant cette instance dans cet arbre. Ainsi l'enregistrement (record) ISAM représenté par le rectangle (11a') est l'enregistrement ISAM de l'instance d'objet (MOI) de classe X représentée par la référence (11a) sur l'arbre de la MIB de la figure 1. Ces noeuds sont chaînés entre eux par les liens (80) "premier fils", (81) "frère suivant" et (82) "frère précèdent" comme le montre la figure 8. Ces liens permettent l'évaluation des portés (scopes) des opérations CMIS via un parcours de noeud père (/a) en noeud fils (/a/a). De même le noeud (/a/a) devient le père du noeud fils (/a/a/a) et ce même noeud (/a/a) a pour frère le noeud (/a/b). Le noeud (/a)n'a pas de frère précédent, ni de frère suivant, le noeud (/a/a) n'a pas de frère précédent, mais a un frère suivant et un premier fils. Le noeud (/a/b) n'a pas de frère suivant, ni de premier fils mais a un frère précédent (/a/a).

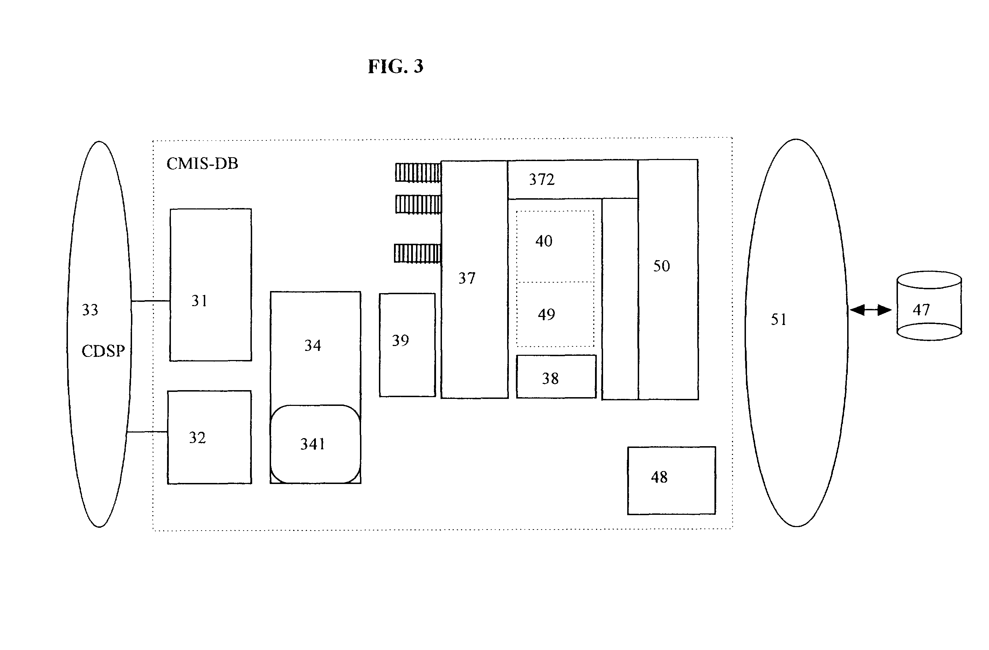

De plus chacun de ces noeuds (/a; /a/a; /a/b; /a/a/a: /a/a/b; /a/a/c) comporte un pointeur respectif (83a; 83a/a; 83a/b; 83a/a/a; 83a/a/b; 83a/a/c) vers une autre structure de données constituée d'une pluralité d'enregistrements (record) ISAM représentés par les rectangles respectifs (84a, 84a/a, 84a/b, 84a/a/c, 85, 86), dont chacun contient physiquement tous les attributs de chacune des instances d'objet administré (MOI) créées dans la MIB. Le moteur de recherche de CMIS-DB lorsqu'il effectue une portée (scope) parcours l'arbre de contenance de noeud en noeud et à chaque noeud regarde la classe de l'objet. Dès qu'il détecte un objet de classe collection il effectue un traitement particulier ci-après décrit dans lequel il utilise la seule différence physique, dans le cas particulier des objets de type collection (moiCollection et moiCollectionBack) qui est la présence des attributs (85, 86) respectivement de ensemble d'instance (setOfMOI) et de ensemble de collection (setOfCollection). L'administrateur CMIS-DB utilise la zone de stockage de l'attribut ensemble d'instances "setOfMOI" de cette dernière structure (86) pour mémoriser la liste (/a/b, /a/a/c, /a/a) des pointeurs (87, 87', 87") vers le stockage physique des noeuds de l'arbre de contenance qui représente les MOI (MOIa/b, MOIa/a/b, MOIa/a/c) appartenant à cette instance de collection. Le moteur de CMIS-DB (37 figure 3) utilise ces pointeurs (87, 87', 87") à la place des liens (80) "premier fils" et (81) "frère suivant" pour évaluer la portée des opérations CMIS, à chaque fois qu'il tombe sur une instance de type collection. Dans le cas particulier des instances de la classe moiCollectionBack, il existe un attribut caché ensemble de collection (setOfCollection) directement géré par l'administrateur CMIS-DB dans la structure (84a/a/c) de stockage des attributs de la MOI ou des MOls (dans l'exemple de la figure 8 il s'agit de la MOIa/a/c) et ceci quelle que soit leur classe. Dans cet attribut caché est maintenu la liste des pointeurs arrières (89) vers les instances (dans l'exemple MOI/a/a/b) de classe moiCollectionBack qui référencent cette MOI (MOI/a/a/c). En utilisant cet attribut caché à travers soit une M-ACTION spécifique de CMIS-DB soit un M-GET explicite sur ce seul attribut caché ensemble de collection "setOfCollection", les applications clientes du serveur CMIS-DB peuvent obtenir en une seule opération CMIS la liste des instances d'objet (MOI/a/a/b) de la classe moiCollectionBack qui référencent une MOI donnée (MOI/a/a/c).

Toutes les opérations CMIS relatives à la MIB gérées par l'administrateur CMIS-DB sont acheminées entre l'application de gestion et CMIS-DB par l'infrastructure de communication ISM (CDSP). Ainsi, CMIS-DB est considéré par ses applications comme un administrateur d'objets (object manager) qui stocke et gère une partie de la MIB dans une base de donnée.

Le serveur CMIS-DB interagit avec le CDSP (33) à travers une interface (32). Les interactions entre tous les composants de l'administrateur ISM sont réalisés à l'aide de messages CMIS acheminés par CDSP.

La figure 3 représente l'architecture de l'administrateur CMIS-DB qui comprend un gestionnaire d'opérations CMIS (CMIS operations handler) (31) dialoguant selon le protocole du (CDSP) (33) avec l'infrastructure de communication, un module programmable d'extension utilisateur codé en SML (SML MIB toolkit) (34), un module (37) découpé en un sous module exécuteur de requête (MIB queries performer), un sous module de navigation, d'évaluation de portée, de filtre, et un sous module optimiseur par préfiltrage (372), un traducteur de forme globale en forme locale (38), un module d'import/export (39), une antémémoire de l'arbre de contenance d'objets (cache of containment tree) (40), une antémémoire des instances de gestion d'objet (cache of MOls)(49), un module d'accès à la mémoire physique (50) qui interface le serveur de la base de donnée sous-jacente (51), un module administrateur de transactions d'accès physique (storage transaction manager) (48) et un disque physique (47).

Le kit de programme de développement (SML MIB toolkit) (34) charge les éventuelles extensions SML (Systems Management Language) (341) de l'utilisateur et fournit en SML les primitives d'accès à la base d'information d'administration (MIB) gérée par le service CMIS-DB. En outre, le kit de développement de programme (SML MIB toolkit) (34) évalue les pré-conditions et les post-conditions posées par l'utilisateur, lors de chaque opération sur la base d'information d'administration (MIB) et exécute les extensions SML qui sont déclenchées sur ces conditions.

L'exécuteur des requêtes (37) sur la base d'information d'administration effectue réellement la requête ou l'opération sur la représentation logique de la base d'information d'administration (MIB). Il navigue en fonction de l'argument de l'instance d'objet de base (BOI, baseObjectInstance) de la requête , pour obtenir l'instance initiale de l'évaluation de la portée (scope) et du filtre.

Le mode de fonctionnement de l'exécuteur des requêtes (37) de la base d'information d'administration (MIB query performer) dépend des arguments portée (scope) et filtre de l'opération. Lorsque aucun préfiltrage par les attributs indexés dans la base de données sous-jacente n'est utilisable, l'exécuteur des requêtes de la base d'information d'administration (MIB query performer) (37) parcourt la liste de tous les fils pour lire les instances de gestion d'objets (MOI) correspondant à la portée (scope).La décision de savoir si un préfiltrage peut être exécuté ou non dépend de l'analyse de la structure du filtre.

Si aucun préfiltrage par les attributs indexés dans la base de données sous-jacente n'est utilisable, alors l'exécuteur de requête (37) parcourt la liste de tous les fils pour lire les MOI correspondant à la portée (scope). Dans les cas particulier des instances d'objet de type collection (moiCollection ou moiCollectionBack), on utilise la pseudo-portée (pseudo-scope) des relations transversales à la place de la liste des fils. Cette pseudo-portée (pseudo-scope) étant définie par la liste des MOls déclarées dans l'attribut "setOfMOI". Puis l'exécuteur des requêtes (37) de la base d'information d'administration (MIB query performer) évalue le filtre sur chaque instance précédemment sélectionnée. Si l'évaluation est positive Il exécute l'opération sur la base d'information d'administration (MIB) et retourne les réponses individuelles au gestionnaire dudit service commun de gestion d'informations (CMIS handler) (31) ou au kit de programme de développement (MIB toolkit) (34).

La figure 6 représente une instance de la classe "moiCollection" affichée à l'écran du terminal par une interface graphique permettant à l'utilisateur d'accéder à l'administrateur de CMIS-DB. Cette fenêtre permet à l'utilisateur de définir les différents attributs de la classe "moiCollection". Un premier pavé (71) permet d'afficher l'identifieur de la relationlD ou de rentrer celui-ci, lorsqu'on définit une nouvelle moiCollection.

L'attribut setOfMOI permet d'établir la liste des instances membres de la relation représentée. Pour cela, cet attribut permet dans un deuxième pavé (72) l'affichage d'une liste déroulante qui définit les instances membres de la relation, liste dans laquelle l'opérateur entre le nom DN (distinguished name) des instances qu'il veut définir comme membre de la relation.

Un troisième pavé (73) permet de définir le mode de réponse indiquant comment la valeur de l'attribut "setOfMOI" est retournée. L'opérateur peut choisir parmi les trois modes "dontReturnSetOfMOI", "returnSetOfNonSpecific", et "returnSetOfFuIIDN".

Un quatrième pavé (74) permet de définir l'attribut "noDuplicates" et l'opérateur peut choisir entre les deux valeurs FALSE ou TRUE.

Un cinquième pavé (75) permet de définir l'attribut typeOfReplyNaming et l'utilisateur pourra avoir le choix entre les trois valeurs "naturalFDN", "specificFDN", "nonSpecificForm".

Un sixième pavé (76) permet de définir la classe de l'objet et d'indiquer qu'elle est du type "moiCollection".

Un septième pavé (77) permet d'indiquer le lien de nommage utilisé.

Deux autres pavés (78, 79) sont destinés à des utilisations ultérieures.

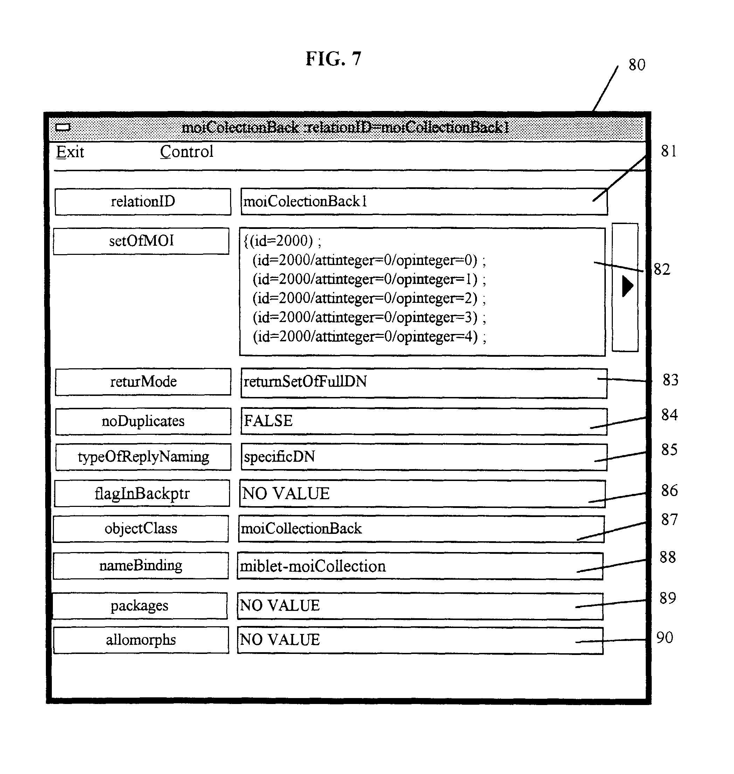

De même, l'utilisateur pourra, par l'affichage d'une fenêtre formatée pour la classe "moiCollectionBack" (figure 7), définir une instance de classe "moiCollectionBack" en définissant dans un premier pavé (81) l'identifieur de la relation, par exemple "moiCollectionBack1", dans un deuxième pavé (82) la liste des instances définies par l'utilisateur et faisant partie de l'attribut caché "setOfCollection", dans les troisième (83), quatrième (84) et cinquième (85) pavés, les mêmes attributs que dans l'instance de "moiCollection". Un sixième pavé (86) permet de définir l'attribut "flaglnBackPtr" dont la valeur sera positionnée à la création de l'instance "moiCollectionBack" par l'utilisateur pour filtrer les recherches arrières des instances de classe moiCollectionBack référençant une MOI donnée. Enfin, les septième et huitième pavés (87, 88) correspondent respectivement aux sixième et septième pavés (76, 77) de la classe "moiCollection". Les neuvième et dixième pavés (89, 90) sont réservés à des usages ultérieurs.

On comprend donc que la solution de l'invention consiste en l'introduction des classes d'objet "moiCollection" et "moiCollectionBack" qui permettent de maintenir automatiquement une copie (virtuelle) des objets référencés, comme subordonnée dans l'arbre de contenance (containment tree) de ces objets collections. Normalement dans un cadre purement CMIS, CMIS-DB doit répondre à la portée (scope) sous une instance de moiCollection ou de moiCollectionBack avec le nom des copies virtuelles des objets référencés, ce qu'il fait (voir le mode specificFDN), mais, sous option, il a possibilité de répondre avec le nom réel (i.e. naturalFDN) des objets référencés pour permettre à l'application de s'y retrouver plus facilement dans les réponses. Une troisième possibilité de nommage (i.e. objectInstance au format nonSpecificForm) permet d'utiliser directement l'adresse physique des instances référencées dans une collection pour accélérer les accès à ces instances lors de recherches ou de parcours particulier qui pourrait être programmés dans la mib-toolkit (et uniquement là, car ce type d'adresse physique n'est pas un adressage global valide hors du serveur CMIS-DB.

D'autres modifications à la portée de l'homme de métier font également partie de l'esprit de l'invention.

## Revendications

1. Procédé de référencement dans une base d'information d'administration (MIB) d'une collection d'instances d'objet à partir d'une autre instance d'objet n'appartenant pas au même sous-arbre, par déclarations des instances d'objets managés (MOI) membres de la collection, qui permet d'appliquer une sélection par les arguments portée/filtre (scope/filter) des opérations standard du service CMIS sur les n instances de la collection pour optimiser le parcours des relations transversales dans l'arbre de contenance entre ces instances d'objets managés (MOI) et qui est caractérisé en ce qu'il comprend une première étape de création d'une instance d'objet de type collection, c'est-à-dire de classe prédéfinie ("moiCollection" ou "moiCollectionBack") par le gestionnaire d'objet local CMIS-DB de l'administrateur pour représenter ces relations transversales et qui permet de maintenir automatiquement une copie virtuelle des objets référencés, copies virtuelles qui seront subordonnées à l'objet collection dans l'arbre de contenance.

2. Procédé de référencement selon la revendication 1, caractérisé en ce que cette étape de création s'effectue grâce à la soumission par l'application cliente d'une opération M-CREATE (création d'une instance d'objet de la MIB) d'une instance d'objet (MOI) de prédéfinie ("moiCollection" ou "moiCollectionBack") et permet de déclarer dans un attribut (setOfMOI) contenant une liste quelconque d'instances (MOI) d'objets de la MIB identifiées par l'application cliente et destinées à être référencées dans cette instance d'objet de type collection (classe "moiCollection" ou "moiCollectionBack").

3. Procédé de référencement selon la revendication 1 ou 2, caractérisé en ce qu'il comporte des éventuelles étapes supplémentaires de mise à jour par une opération M-SET de l'attribut setOfMOI de l'instance d'objet de classe prédéfinie ("moiCollection" ou "moiCollectionBack"), pour ajouter ou détruire des éléments de la liste des MOI référencées dans la collection.

4. Procédé de référencement selon la revendication 1 ou 3, caractérisé en ce qu'il comporte une étape supplémentaire de consultation ou de modification des objets référencés dans une collection par une requête M-GET ou M-SET avec les arguments suivants : objet de base représentant la collection, portée (scope) de premier niveau subordonné, et filtre quelconque.

5. Procédé de référencement selon la revendication 4, caractérisé en ce qu'il comporte une étape de détermination du type de nommage à utiliser dans les réponses aux opérations par des requêtes portées (scoped) sous cette instance de type collection (classe "moiCollection" ou "moiCollectionBack") par la mise à jour d'un attribut spécifique ("typeOfReplyNaming").

6. Procédé de référencement selon la revendication 4 ou 5, caractérisé en ce qu'il comporte une étape de renvoi des réponses aux requêtes CMIS-DB en fonction de l'attribut fixant le type de nommage à utiliser pour identifier les objets référencés par l'instance d'objet de type collection (classe "moiCollection" ou "moiCollectionBack") .

7. Procédé de référencement selon la revendication 4, caractérisé en ce que le paramètre portée (scope), lorsque l'objet de base (baseObject) est de type collection, ("moiCollection" ou "moiCollectionBack"), est détecté par ledit service commun de gestion d'information (CMIS) qui évalue cet argument de portée (scope) comme un parcours des objets membres de la collection représentée par l'objet de base (baseObject) de classe prédéfinie ("moiCollection", ou "moiCollectionBack").

8. Procédé de référencement selon la revendication 2 ou 3, caractérisé en ce qu'il comporte une étape de vérification de la validité des liens physiques transversaux calculés initialement lors des mises à jour de l'attribut setOfMOI est effectué en comparant l'attribut FDN réel de l'instance pointée et le FDN mémorisé dans l'attribut ensemble d'instances (setOfMOI) de l'instance d'objet de collection de classe prédéfinie ("moiCollection" ou "moiCollectionBack").

9. Procédé de référencement dans un gestionnaire de MIB selon la revendication 6, caractérisé en ce que l'étape de renvoi des réponses transmet le FDN de l'objet réel référencé dans l'argument instance d'objets managés de chaque réponse si le type de nommage choisi est (natureIFDN) ; ou le FDN de la copie virtuelle si le type de nommage est d'un second type (spécificFDN) ou encore un adressage direct au stockage dans le cas où le type de nommage est d'un troisième type (nonSpecificForm).

10. Procédé de référencement selon la revendication 1 ou 3, caractérisé en ce qu'il comporte une étape de nettoyage de l'attribut ensemble d'instances (setOFMOI) des instances de type collection ("moiCollection" ou "moiCollectionBack"), lorsque CMIS-DB détecte que des instances déclarées dans la collection consultée n'existent plus dans la MIB.

11. Dispositif pour délivrer un service de gestion de MIB selon un procédé de référencement selon une des revendications 1 à 10, caractérisé en ce qu'une classe d'objet managé de type collection ("moiCollection" ou "moiCollectionBack") optimise le parcours des relations transversales dans l'arbre de contenance entre des instances d'objets appartenant au même serveur CMIS-DB de gestion de MIB.

12. Dispositif pour délivrer un service de gestion de MIB selon la revendication 11, caractérisé en ce qu'il comprend des moyens de vérifier que l'instance d'objet managé (MOI) référencée existe réellement dans la base (MIB) de gestion d'informations gérée localement et d'établir les liens internes entre l'instance de type collection, c'est à dire de classe prédéfinie ("moiCollection" ou "moiCollectionBack") et le noeud physique qui représente l'instance d'objets managés (MOI).

13. Dispositif pour délivrer un service de gestion de MIB selon la revendication 12, caractérisé en ce que lorsque l'objet de base (baseObject) est de la classe prédéfinie ("moiCollection" ou "moiCollectionBack"), le paramètre portée (scope), s'il est égal au premier niveau subordonné, est détecté par ledit service de gestion de MIB qui évalue cet argument de portée (scope) comme un parcours des objets membres de la collection représentée par l'instance d'objet de base (baseObject) de classe prédéfinie ("moiCollection", ou "moiCollectionBack") .
